# EUROPÄISCHE PATENTSCHRIFT

(11) **EP 1 561 328 B1**
(45) Veröffentlichungstag und Bekanntmachung des Hinweises auf die Patenterteilung: **02.01.2008**
(21) Anmeldenummer: 03773546.1
(22) Anmeldetag: 17.10.2003
(51) Int. Cl.: H04L 29/06, H04M 7/00

(54) **ÜBERTRAGUNG VON ANRUFSTEUERUNGSPARAMETERN ZWISCHEN ZWEI MEDIA GATEWAY CONTROLLERN IN SIP/SIP-T NETZEN --------------------------------------------------------------------------------------**
TRANSMISSION OF CALL-CONTROL PARAMETERS BETWEEN TWO MEDIA GATEWAY CONTROLLERS IN SIP/SIP-T NETWORKS
TRANSMISSION DE PARAMETRES DE COMMANDE D'APPEL ENTRE DEUX CONTROLEURS DE PASSERELLE DE TELECOMMUNICATION DANS DES RESEAUX SIP/SIP-T

(30) Priorität: 14.11.2002 DE 10252989
(43) Veröffentlichungstag der Anmeldung: 10.08.2005
(73) Patentinhaber: NOKIA SIEMENS NETWORKS GMBH & CO. KG, 81541 München (DE)
(72) Erfinder: BAUMANN, Thomas, 83607 Holzkirchen (DE); HOFFMANN, Klaus, 81735 München (DE)
(86) Internationale Anmeldenummer: PCT/DE2003/003456
(87) Internationale Veröffentlichungsnummer: WO 2004/045182

(56) Entgegenhaltungen:
- WO-A-01/78418
- WO-A-02/41574
- US-A1- 2001 036 176
- CHANG-SUP KEUM, YOUNG-IL CHOI, HO-JIN PARK, BYUNG-SUN LEE: "SDL Pattern-based Desing for SIP-T Protocol in a Softswitch System" PROCEEDINGS OF THE IASTED INTERNATIONAL CCONFERENCE COMMUNICATION SYSTEM AND NETWORKS, 9. - 12. September 2002, Seiten 326-331, XP009025336 Malaga, Spain

## Beschreibung

Die Erfindung betrifft ein Verfahren zum Übertragen von Anrufsteuerungsparametern zur Umschaltung zwischen einem Sprach- und einem Datenübertragungsmodus zwischen zwei Media Gateway Controllern, die zwischen zwei Telekommunikationsendgeräten getrennt von einem Aufbau einer Medium- bzw. Bearerverbindung über ein IP-Netz eingesetzt werden.

Serviceprovider, d.h. Unternehmen, die, beispielsweise aufsetzend auf die Transportdienste der Teilnetze (Backbones) des Internet, ihren Kunden bzw. Benutzern die vermittelte Datenkommunikation ermöglichen, stehen im Kommunikationsbereich vor allem den Herausforderungen gegenüber, neue schnelle und effiziente Dienste einzuführen. Dabei ist die Netzwerk-Infrastruktur für Verbindungsnetzbetreiber (Carrier) ein wichtiger Kostenpunkt, bei dem durch eine gelungene Optimierung eine Kostenersparnis erreicht werden kann.

Vor der Auseinandersetzung mit der Frage, wie ein Serviceprovider sich die Datensignalisierung für Servicemanagement-Lösungen zunutze machen kann, muss jedoch die Überlegung stehen, was der Kunde von einem Serviceprovider, der Mehrwertdienste und Services liefert, erwartet. Die Erwartung schließt zur Zeit ein vollständiges Spektrum integrierter Dienste, eine einfache und einheitliche Abrechnung in Echtzeit sowie einen umfassenden Zugang zu meßbaren und protokollierten Servicemaßstäben ein.

Um bei einem Serviceprovider trotz Bereitstellung von umfassenden Diensten dennoch eine Optimierung der Betriebskosten zu erzielen, geht man beim Einrichten einer Kommunikationsverbindung dazu über, den Verbindungsaufbau (Call) und den Medium- bzw. Beareraufbau getrennt voneinander durchzuführen.

Dadurch kann zum Durchschalten des Nutzkanals auf eine relativ preisgünstige Bearertechnologie zurückgegriffen werden, während beispielsweise die Signalisierung getrennt hiervon erfolgt.

In Fällen, in denen eine Trennung (Dekomposition) von Verbindungsaufbau und Medium- bzw. Beareraufbau durchgeführt wird, ist zur Zeit eine Kommunikation zwischen wenigstens zwei Media Gateway Controllern notwendig, die beim Verbindungsaufbau zur Datensignalisierung dienen.

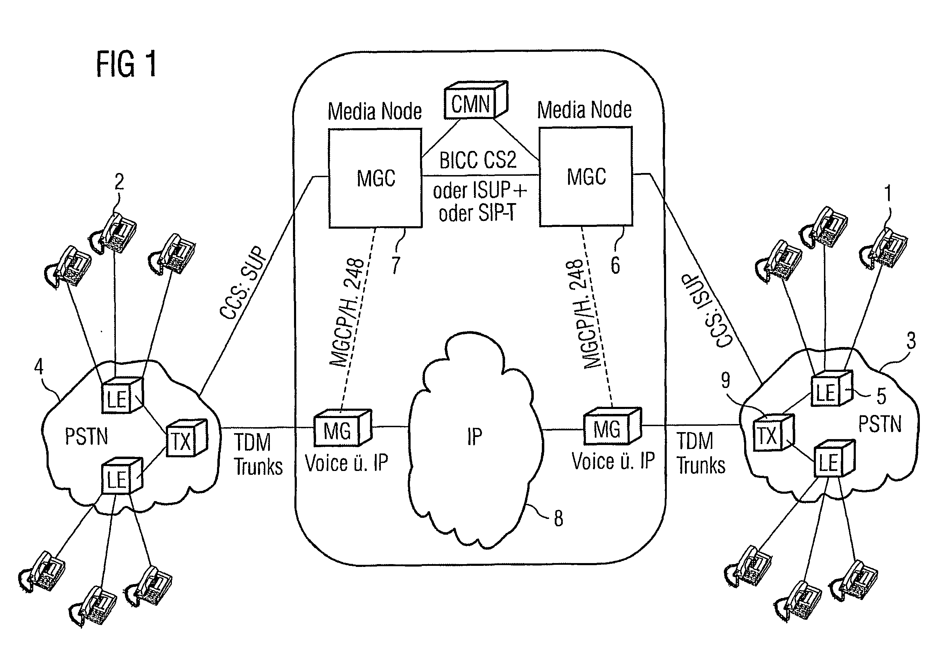

Fig. 1 zeigt in schematischer Weise, wie bei einer derartigen Trennung von Verbindungsaufbau und Beareraufbau die für den Aufbau einer Kommunikationsverbindung zwischen zwei Telekommunikations-Endgeräten 1, 2 notwendigen Informationen zwischen den einzelnen Netzkomponenten ausgetauscht werden. Dabei fordert ein A-Teilnehmer über ein Telekommunikations-Endgerät 1, welches an ein erstes öffentliches Telefonnetz (PSTN) 3 angeschlossen ist, bei einer zugehörigen Ortsvermittlungsstelle (Local Exchange; LE) 5 einen Rufaufbau zu einem Telekommunikations-Endgerät 2 eines B-Teilnehmers an.

Diese Rufanforderung bewirkt einen Verbindungsaufbau, der über zwei Media Gateway Controller (MGC) 6, 7 erfolgt. Dabei werden Informationen mittels eines entsprechenden Signalisierungsprotokolls (Common Channel Signaling CCS:ISUP) an einen ersten Media Gateway Controller 6 übertragen. Dieser kommuniziert seinerseits mit einem zweiten Media Gateway Controller 7 über eine BICC CS2/ISUP+ Schnittstelle via Q.765.5 BAT (Bearer Application Transport). Der zweite Media Gateway Controller 7 erhält somit alle Dienst- oder Leistungsmerkmale, die zum Aufbau der Verbindung notwendig sind, und überträgt diese Informationen an ein öffentliche Telefonnetz 4, in welchem das Endgerät 2 des B-Teilnehmers angeordnet ist. Die Übertragung erfolgt wiederum über ein entsprechendes Signalisierungsprotokoll.

Aus dem Stand der Technik ist bekannt, dass durch Einführung von geeigneter Kommunikation zwischen einem Media Gateway Controller und zuehörigem Media Gateway die preiswerten Bearertechnologien wie IP für die Durchschaltung des Nutzkanals angewandt werden können. Gegenwärtig gibt es den ITU-T-Standard Q.1902.X BICC CS2 (Bearer Independent Call Control Capability Set 2), mit einem eigenen Service Indicator beim MTP (Message Transfer Part) und Q.765.5 BAT (Bearer Application Transport), welche für IP-RTP als Bearertechnologie beschreibt, wie bei der Trennung von Verbindungsaufbau und Durchschalten des Nutzkanals dem Endkunden seine gewohnten Dienste im Telekommunikationsnetz bereitzustellen sind. In der Zwischenzeit ist bei IETF der RFC 3204 (ISUP MIME Type) entstanden, welcher den Tunneltransport von ISUP Nachrichten in SIP Nachrichten erlaubt. Solche SIP Nachrichten zur Media Gateway Controller Interkommunikation werden auch als SIP-T Nachrichten bezeichnet.

Als nachteilig hat es sich bei der bekannten Lösung herausgestellt, dass bei einer Kommunikation zwischen Media Gateway Controllern untereinander Informationen zwischen den Media Gateway Controllern nur über die BICC CS2/ISUP+Schnittstelle via Q.765.5 BAT (Bearer Application Transport) übertragen werden können. Dies gilt insbesondere dann, wenn für die Datenübertragung eine Modifikation des Bearers notwendig ist. So ist es beispielsweise im Falle einer Fax-Umschaltung zur Zeit nicht möglich, die hierzu notwendigen Informationen zwischen den Media Gateway Controllern mittels eines SIP-Protokolls zu übertragen, da in den ITU-T Standards für BICC CS2 das Interworking SIP auf BICC noch nicht festgelegt ist. Das SIP-Protokoll ist - im Gegensatz zu BICC - nicht nur als Teilnehmerprotokoll für Sprachverbindungen sondern auch für Multimedia (Sprache und Daten) geeignet und wird global gesehen aus diesem Grund eine zunehmende Bedeutung erhalten.

Aufgrund der erläuterten Nachteile aus dem Stand der Technik liegt der vorliegenden Erfindung die Aufgabe zugrunde, ein Verfahren anzugeben, mit dem es möglich ist, Nachrichten zwischen Media Gateway Controllern über das SIP_T-Protokoll zu übertragen und mit dem es insbesondere möglich ist, bei einem Verbindungsaufbau, welcher getrennt vom Durchschalten eines Nutzkanals (Beareraufbau) durchgeführt wird, über die BICC CS2/ISUP+Schnittstelle der Media Gateway Controller auch die Informationen zur Modifikation des Bearers zu übertragen.

Unter Nachrichten seien hierbei alle prinzipiellen Informationen verstanden, die als Anrufsteuerungsparameter beispielsweise zwischen den Media Gateway Controllern übertragen werden. Hierbei ist insbesondere eine Abgrenzung zu Signalen zu sehen, welche beispielsweise zur Signalisierung zwischen den Media Gateway Controllern ausgetauscht werden. Derartige Nachrichten könnten zum Beispiel solche Informationen enthalten, die anzeigen, dass für eine Kommunikationsverbindung beidseitig ein Codec umgeschaltet werden muss, wie es etwa bei einer Fax- oder Modemübertragung erforderlich ist.

Diese Aufgabe wird bei einem Verfahren der eingangs genannten Art dadurch gelöst, dass die Anrufsteuerungsparameter unter Umsetzung in das SIP- oder SIP_T-Protokoll oder aus diesem in ein Standard-Signalisierungsprotokoll übertragen werden.

Der Vorteil der Erfindung liegt insbesondere darin, dass ein besonders leicht zu realisierendes, aber dennoch effektives Verfahren angegeben wird, mit dem sich ein Serviceprovider die Datensignalisierung für einen erweiterten Bereich von Servicemanagement-Lösungen zunutze machen kann. Die Erfindung schließt den wesentlichen Gedanken ein, ein Mapping von ISUP Nachrichten im Signalisierungsprotokoll einzusetzen. Es wird vorgeschlagen, die Nachrichten in das Protokoll zur Verwaltung von Multimedia-Sitzungen zu integrieren, indem Nachrichtenzellen, in welchen die zu übertragenden Nachrichten enthalten sind, in Containern des Signalisierungsprotokolls bzw. auf der SDP-Ebene oder BAT Q.765-Ebene eingefügt werden. Durch das Mapping werden die Nachrichten, welche zur Modifikation des Bearers notwendig sind, in die SDP-Ebene bzw. BAT Q.765-Ebene des Protokolls zur Verwaltung von Multimedia-Sitzungen eingefügt, womit über die SIP-, SIP-T oder BICC CS2/ISUP+Schnitt-stelle zwischen den Media Gateway Controllern bearerunab-hängige Signalisierungsinformationen ausgetauscht werden können.

Bevorzugte Weiterbildungen der Erfindung sind in den Unteransprüchen angegeben.

So ist in einer besonders bevorzugten Ausführungsform vorgesehen, dass zum Durchschalten des Nutzkanals auf die IP-Technologie zurückgegriffen wird, so dass die Datenübertragung nach Aufbau der Kommunikationsverbindung zwischen den Telekommunikations-Endgeräten über ein IP-Netz erfolgt. Der Vorteil dieser Ausführungsform liegt insbesondere darin, dass hierbei eine besonders preiswerte und weitverbreitete Bearertechnologie verwendet wird, was zu einer Kosteneinsparung auf seiten des Serviceproviders führt.

Besonders bevorzugt verwendet man als Signalisierungsprotokolle für die Anrufsteuerung BICC-Protokolle (insbesondere das BICC CS2-ISUP+Protokoll), welche Signalisierungsprotokolle für die Betreiber unabhängige Anrufsteuerung darstellen. Dadurch ist der Netzbetreiber in der Lage, einen vollständigen Satz von PSTN/ISDN-Diensten einschließlich aller Supplementary Services über eine Vielzahl von Transportnetzen anzubieten. Grundsätzlich kommen hier aber auch andere Signalisierungsprotokolle in Frage.

In einer bevorzugten Ausführungsform der vorliegenden Erfindung ist vorgesehen, dass bei einer Faxübertragung, die anhand eines Faxtons auf einer Seite erkannt wird, dies über den Media Gateway Controller zur anderen Seite signalisiert wird. Dabei wird als Nachricht die Information ausgetauscht, dass der IP-Codec auf beiden Seiten der Verbindung umgeschaltet werden soll, so dass eine Faxübertragung möglich ist. Dazu muß der Codec auf den G.711- oder T.38-Codec umgeschaltet werden. Außerdem wird die Maximum Jitter Buffer Size auf beiden Seiten hochgesetzt und die Silence Suppression wird ausgeschaltet. Die Echo Cancellation wird nicht verändert. In der Regel ist die Echo Cancellation beim Voice Call eingeschaltet, was auch beim Fax Call die Qualität der Datenübertragung zwischen den Faxgeräten verbessert. Für eine Modemübertragung gilt ähnliches: Wird ein Modemton erkannt, wird ebenfalls der IP Codec umgeschaltet, wobei hier nur der Codec G.711 benützt werden kann. Es wird ebenfalls die Maximum Jitter Buffer Size hochgesetzt und die Silence Suppression ausgeschaltet. Die Echo Cancellation wird aber auch ausgeschaltet.

Es gilt nun diese Anrufsteuerungsparameter, die bisher im Standard-Signalisierungsprotokoll vorliegen, in geeigneter Weise in das SIP bzw. SIP_T-Protokoll zu übertragen. Dies geschieht im SDP Teil der SIP/SIP_T-Nachricht gemäß RFC2327. Die vorgeschlagene Lösung funktioniert für SIP und SIP_T, und deshalb steht im folgenden die Bezeichnung "SIP" immer für beide Schnittstellen.

Die folgende Tabelle zeigt als Beispiel hierfür eine mögliche Realisierung der Umsetzung von BICC-Parameter im SDP-Teil und umgekehrt, was nachstehend näher erläutert wird. Es sei darauf hingewiesen, dass in der Tabelle in der linken Spalte die BICC-Parameter und der rechten Spalte der zugehörige SDP-Teil dargestellt ist. Es sei darauf hingewiesen, dass beim Umsetzen einer "SIP:200 OK"-Quittierungsnachricht im BICC nur ein Action Indicator im SIP aufgebaut wird.

| Q.765.5 Info Element APM (APP) BICC | SDP Element (re-INVITE) SIP |
|---|---|
| Action Indicator | Das Info Element "Action Indicator" wird implizit in der SDP Session mitübertragen. |
| Single Codec | SDP Media Description Field, media-format (payload type number) SDP Attribute "rtpmap"(Codec Mapping) SDP Attribute "fmtp" (Codec parameter) |
| Echo Cancellation | SDP Attribute "ecan" (siehe RFC3108) |
| Action Indicator successful modified | 200 OK |

Die BICC CS2/ISUP+ Nachricht für eine Fax- bzw. Modem-Codec-umschaltung enthält gemäß dem obigen Beispiel die folgenden Info Elemente nach Q.765.5: (A) Action Indicator, (B) Single Codec und (C) Echo Cancellation, wobei das letztere ein proprietäres Element ist. Nachfolgend wird näher auf diese Info-Elemente eingegangen.

### (A) Action Indicator (Identifier 0x00000001):

Das Info-Element "Action Indicator" enthält den Wert "modify codec" (0x00001011), wenn die Codec Umschaltung von einem Media Gateway Controller eingeleitet wird. Er wird nicht nach SDP umgesetzt, sondern wird auf der anderen Seite regeneriert, wenn eine "SIP:re-INVITE" Nachricht mit einer SDP Session empfangen wird, die einen der unten beschriebenen Codecs für die Datenübertragung enthält (siehe Single Codec). Bei der Umsetzung des Info-Elementes "Action Indicator" in das SIP-Protokoll bleibt die Connection Address des RTP Port unverändert.

Das Info-Element "Action Indicator" enthält den Wert "successful codec modification" (0x00001100), wenn der entfernte Media Gateway Controller die Codec Umschaltung erfolgreich durchgeführt hat und die "SIP_T:re-INVITE-" oder SIP- Nachricht quittiert. Hier erhält die initiierende Seite eine "SIP:200 OK" Quittung mit einer SDP Session, die genau den gleichen Codec für die Datenübertragung enthält, und kann so den Action Indicator regenerieren. Auch hier bleibt bei der Umsetzung des Info-Elementes "Action Indicator" in das SIP-Protokoll die Connection Address des RTP Port unverändert.

### (B) Single Codec (Identifier 0x00000101):

Das Info-Element "Single Codec" ist ein proprietäres Kennzeichen und enthält den Codec, auf den für die Fax- bzw. Modem-Datenübertragung umgeschaltet werden soll. Dabei gibt es derzeit zwei mögliche Codec-Werte:

### (i) "G.711 64 kbit/s A-law modem transparency"

Dieser Codec wird übertragen, wenn für die Fax- oder die Modem-Übertragung der Codec G.711 ohne Silence Suppression und mit einem hohen Maximum Jitterbuffer Wert verwendet werden soll.

In einer möglichen Realisierung des erfindungsgemäßen Verfahrens wird vorgeschlagen, diesen Codec gemäß dem IETF Draft "draft-foster-mmusic-vbdformat-01.txt" auf SDP umzusetzen. Demnach könnte dies erfolgen durch:
Angabe eines dynamischen Codecs in der "m=" Zeile: m=audio 3456 RTP/AVP 99
Zuweisung des MIME subtypes "vbd" (voiceband data traffic) zu diesem Codec: a=rtpmap:99 vbd/8000
Zuweisung des "underlying" audio formats (z.B. 8=PCMA) zu diesem Codec: a=fmtp:99 8

Damit wird der anderen Seite mitgeteilt, daß der Voice Codec für eine Datenübertragung auf G.711 gesetzt werden soll. Damit kann dort auch automatisch der Maximum Jitter Buffer hochgesetzt und die Silence Suppression abgeschaltet werden.

### (ii) "ITU-T Recommendation T.38 Codec based on UDP"

Beispielsweise genügt es hier, gemäß "ITU Recommendation T.38, Amendment 2" eine modifizierte SDP Media Description mit mediatype "image", protokoll "udpt1" und payloadtype "t38" aufzusetzen: m=image 3456 udptl t38

### (C) Echo Cancellation (Identifier 0x11100001):

Das Info-Element "Echo Cancellation" enthält die Information, ob die Echo Cancellation auf der anderen Seite ein- oder ausgeschaltet werden soll. Das Info-Element "Echo Cancellation" wird bei Fax-Umschaltung nicht übertragen, da die Echo Cancellation in diesem Fall nicht geändert wird, sondern so verbleibt, wie sie für den Voice Call eingestellt wurde. Bei einer Modem-Umschaltung (Codec "G.711 64 kbit/s A-law modem transparency", s.o.) wird dieses Element übertragen, da die Echo Cancellation ausgeschaltet werden muß, damit die Daten zwischen den Modems fehlerfrei übertragen werden können.

In einer möglichen Realisierung des erfindungsgemäßen Verfahrens wird vorgeschlagen, für die Übertragung dieser Information das SDP Attribute "ecan" aus dem RFC3108 (Conventions for the use of the Session Description Protocol for ATM Bearer Connections) zu verwenden. Der Parameter "directionFlag" wird dabei auf "fb" (forward and backward direction), der Parameter "ecanEnable" wird entsprechend dem Q.765.5 Info Element auf "on" oder "off" gesetzt, und der Parameter "ecanType" wird nicht verwendet und auf "-" gesetzt. Beispiel: "a=ecan:fb on -"

Mit dieser vorgeschlagenen Lösung wird es ermöglicht, dass auch über das SIP_T Protokoll Nachrichten zwischen zwei Media Gateway Controllern transportiert werden können, die für die Modifikation des IP Bearers für eine Fax- oder Modemübertragung notwendig sind. Es ist außerdem das Interworking zwischen BICC CS2/ISUP+ und SIP-T für diese Features möglich. Weiterhin ermöglicht die vorgeschlagene Lösung auch das Interworking zwischen einem SIP-Endgerät und anderen IP basierten Lösungen für diese Features.

Im folgenden werden bevorzugte Ausführungsbeispiele der Erfindung anhand von Zeichnungen näher erläutert.

Es zeigen:
- Fig. 1: eine schematische Ansicht zur Darstellung einer Media Gateway Controller Interkommunikation,
- Fig. 2: eine schematische Darstellung einer ersten Ausführungsform der Erfindung und
- Fig. 3: eine zweite Ausführungsform der Erfindung.

Fig. 1 zeigt eine schematische Darstellung einer Media-Gateway-Controller-Interkommunikation. Diese Interkommunikation ist notwendig in Fällen, in denen eine Trennung (Dekomposition) von Verbindungsaufbau und Medium- bzw. Beareraufbau durchgeführt wird. Ein Teilnehmer-Endgerät 1 in einem öffentlichen Telefonnetz (PSTN) 3 fordert zum Aufbau einer Kommunikationsverbindung über den zugehörigen Local Exchange (LE) 5 und Transitexchange (TX) 9 einen Verbindungsaufbau an, welcher getrennt von dem Durchschalten eines Nutzkanals durchgeführt wird.

Der Verbindungsaufbau erfolgt durch eine Signalisierung (CCS:ISUP) an den zugehörigen Media Gateway Controller (MGC) 6. Dieser Media Gateway Controller 6 kommuniziert mit einem zweiten Media Gateway Controller 7, wobei alle Signalisierungsinformationen zwischen den BICC CS2/ISUP+ Schnittstellen der beiden Controller 6, 7 über Q.765.5 BAT ausgetauscht werden. Der zweite Media Gateway Controller 7 bewirkt anschließend die Signalisierung des Telekommunikations-Endgeräts 2 des B-Teilnehmers.

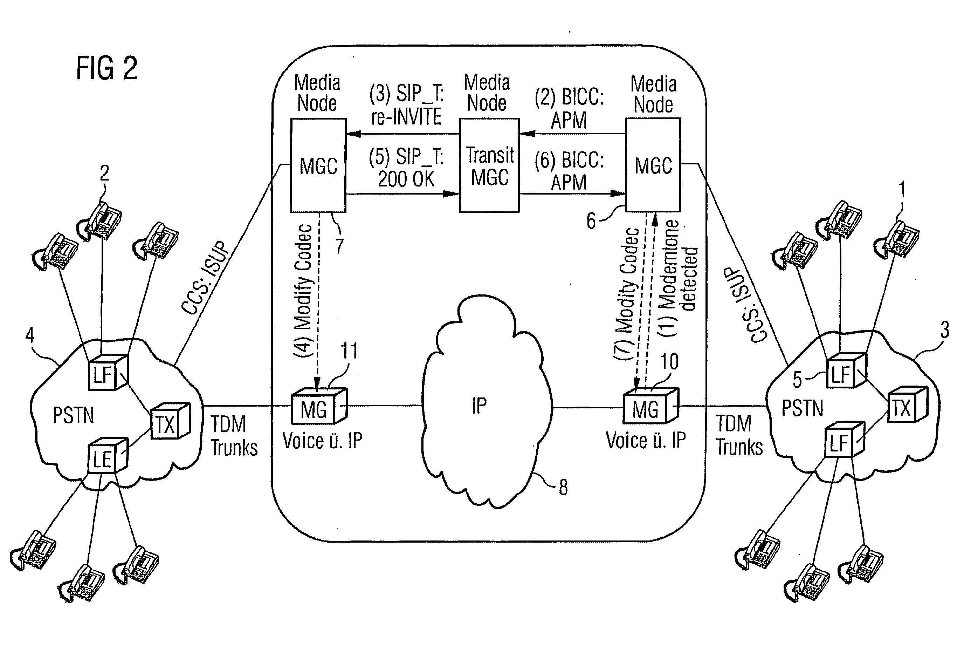

Fig. 2 zeigt eine schematische Darstellung einer ersten Ausführungsform der Erfindung. Bei dem dargestellten Verfahren werden Daten von einem Telekommunikations-Endgerät 1 eines A-Teilnehmers an einen ersten Media Gateway 10 übermittelt. Anhand der übertragenen Daten wird dort der ITU-T Standard (bzw. die Codierungsart) der Datenübermittlung bestimmt. Das Ergebnis wird dann an einen zu dem ersten Media Gateway 10 gehörigen ersten Media Gateway Controller 6 übertragen. Dort wird anhand des ermittelten ITU-T-Standards ein zur Datenübertragung erforderlicher Codec des Nutzkanals ermittelt. Das Ergebnis der Ermittlung des erforderlichen Codec wird an einen zweiten Media Gateway Controller 7 mittels einer entsprechenden Signalisierung übertragen.

Der zweite Media Gateway Controller 7 steuert einen zugehörigen zweiten Media Gateway 11, welcher die Schnittstelle zum Telekommunikations-Endgerät 2 eines B-Teilnehmers bildet. Anschließend schaltet der erste bzw. zweite Media Gateway Controller 6, 7 in dem zugehörigen ersten bzw. Media Gateway 10, 11 den Codec des Nutzkanals auf den ermittelten, zur Datenübertragung erforderlich Codec mittels einer entsprechenden Signalisierung um.

Anhand des ermittelten ITU-Standards der Datenübertragung werden ferner die für die optimale Datenübertragung erforderlichen Übertragungseigenschaften, insbesondere Maximum Jitter Buffer Size, Silence Suppression und/oder Echo Cancellation, bestimmt. Dieses wird ebenso mit der Signalisierung von dem ersten Media Gateway Controller 6 an den zweiten Media Gateway Controller 7 übertragen.

Die Informationsübertragung zwischen den beiden Media Gateway Controllern 6, 7 geschieht im SDP-Teil der SIP-SIP-T-Nachricht gemäß RFC2327. Die Umsetzung der Parameter in das SDP-Protokoll erfolgt hierbei gemäß der zuvor erläuterten Art und Weise.

Nach der Übertragung der Informationen zwischen den beiden Media Gateway Controllern 6, 7 erfolgt die Einstellung der ermittelten Übertragungseigenschaften des Codecs zur Optimierung der Datenübertragung mittels einer entsprechenden Signalisierung von den Media Gateway Controllern 6, 7 an die zugehörigen Media Gateways 10, 11. Die Signalisierung zur Übermittlung des Ergebnisses der Ermittlung des für die Datenübertragung erforderlichen Codec erfolgt somit hierbei durch ein Mapping einer ISUP-Nachricht in einer SIP-Nachricht, insbesondere in einem SDP-Teil der SIP-Nachricht gemäß RFC2327, über SIP-Schnittstellen des ersten und zweiten Media Gateway Controller 6, 7. Die Signalisierung zwischen dem ersten bzw. zweiten Media Gateway Controller 6, 7 und den zugehörigen ersten bzw. zweiten Media Gateways 10, 11 geschieht in vorteilhafter Weise mittels des MGC-Protokolls /H.248. Selbstverständlich sind hier aber auch andere Protokolle denkbar.

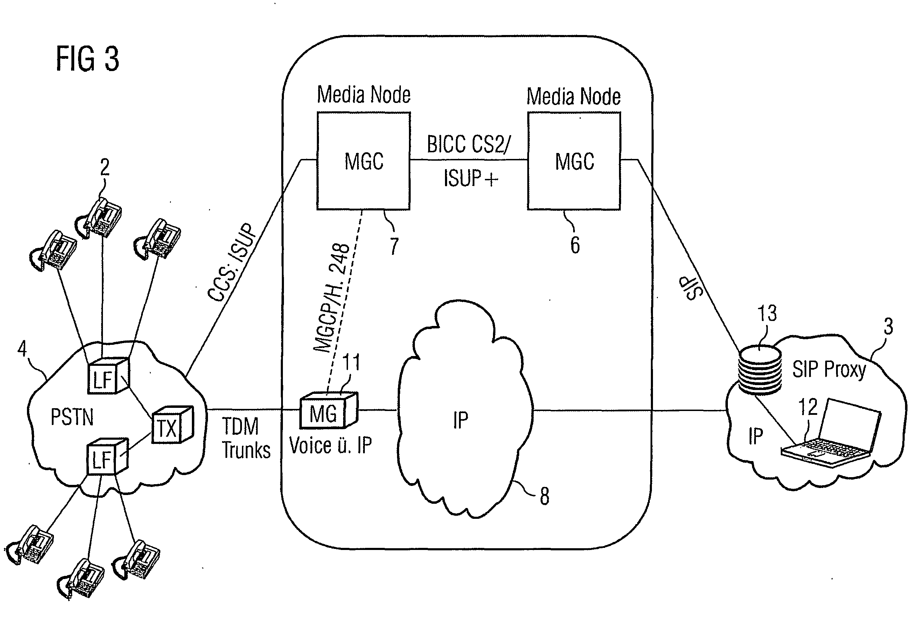

Fig. 3 zeigt eine schematische Darstellung einer zweiten Ausführungsform der Erfindung. In dieser Ausführungsform handelt es sich bei dem Telekommunikations-Endgerät eines Teilnehmers, welcher bei einem Aufbau einer Kommunikationsverbindung beteiligt ist, um einen SIP-Client 12, welcher beispielsweise über ein SIP-Proxy 13 mit dem ersten Media Gateway Controller 6 kommunikativ verbunden ist. Demnach wird angenommen, daß die für den Verbindungsaufbau erforderlichen Informationen von dem SIP-Client 12 an den ersten Media Gateway Controller 6 mittels eines SIP-Protokolls übertragen werden. Bei der Interkommunikation der beiden Media Gateway Controller 6, 7 würden die BICC CS2/ISUP+ Nachrichten genau so wie oben beschrieben in SIP-Nachrichten inklusive SDP Session umgesetzt.

Voraussetzung hierfür ist, dass der SIP Client 12 Fax- oder Modemübertragung unterstützt.

Selbstverständlich sind aber auch andere Ausführungsformen des erfindungsgemäßen Verfahrens denkbar. Weitere mögliche Interworking-Szenarien wäre die SIP-Client Interkommunikation mit einem VolP-Trunking Subscriber, wobei die Konfiguration wie bei der zweiten Ausführungsform zu gestalten ist, jedoch anstelle von zwei Media Gateway Controllern würde hierbei lediglich ein einziger Media Gateway Controller genügen, da eine BICC CS2/ISUP+ zwischen Amtssignalisierung entfällt.

Denkbar wäre des weiteren eine SIP-Client Interkommunikation mit einem Access Gateway (HIA7600) oder mit einem H.323 Subscriber, VoDSL-Subscriber oder SIP-Client.

## Patentansprüche

1. Verfahren zum Übertragen von Anrufsteuerungsparametern zur Umschaltung zwischen einem Sprach- und einem Datenübertragungsmodus zwischen zwei Media Gateway Controllern (6, 7), die zwischen zwei Telekommunikations-Endgeräten (1, 2) getrennt von einem Aufbau einer Medium- bzw. Bearerverbindung über ein IP-Netz eingesetzt werden,
**dadurch gekennzeichnet,**
**dass** die Anrufsteuerungsparameter unter Umsetzung in das SIP- oder SIP_T-Protokoll oder aus diesem in ein Standard-Signalisierungsprotokoll übertragen werden, wobei die Anrufsteuerungsparameter einen Parameter zum Anzeigen einer Codec-Umschaltung der Bearerverbindung enthalten, der beim SIP- bzw. SIP_T-Protokoll implizit in einem SDP-Teil und beim Standard-Signalisierungsprotokoll gemäß Q.765.5 als Action Indicator übertragen wird.

2. Verfahren nach Anspruch 1,
**dadurch gekennzeichnet, dass** das Standard-Signalisierungsprotokoll ein BICC-, BICC-ISUP+-, ISUP+-, VoIP-, VoDSL-, H.323- oder Access Gateway-Protokoll ist.

3. Verfahren nach einem der vorhergehenden Ansprüche,
**dadurch gekennzeichnet, dass** die Anrufsteuerungsparameter gemäß RFC-2327 in einen SDP-Teil des SIP- bzw. SIP_T-Protokolls gemappt und in diesem zwischen den Media Gateway Controllern (6, 7) übertragen werden.

4. Verfahren nach Anspruch 1,
**dadurch gekennzeichnet, dass**
der Action Indicator im Standard-Signalisierungsprotokoll einen ersten Wert ("modify codec") aufweist, wenn die Codec-Umschaltung von dem Media Gateway Controller der einen Seite eingeleitet wird, wobei dieser erste Wert nicht nach SDP umgesetzt sondern auf der anderen Seite regeneriert wird, wenn eine "SIP:re-INVITE"-Nachricht mit einer SDP-Session, die einen Codec für die Datenübertragung anzeigt, empfangen wird.

5. Verfahren nach Anspruch 1,
**dadurch gekennzeichnet, dass**
der Action Indicator einen zweiten Wert ("successful codec modification") aufweist, wenn der Media Gateway Controller der entfernten, zweiten Seite die Codec-Umschaltung erfolgreich durchgeführt hat und eine von der ersten Seite empfangende "SIP:re-INVITE"-Nachricht mit einer SDP-Session, die einen Codec für die Datenübertragung anzeigt, quittiert, wobei die erste Seite eine Quittung ("SIP:200 OK") mit einer SDP-Session erhält, die den gleichen Codec für die Datenübertragung enthält, so dass die erste Seite den Action Indicator regenerieren kann.

6. Verfahren nach einem der vorhergehenden Ansprüche,
**dadurch gekennzeichnet, dass**
die Anrufsteuerungsparameter einen Parameter enthalten, welcher einen Codec anzeigt, auf welchen die Bearerverbindung umgeschaltet werden soll, wobei der Parameter beim SIP- bzw. SIP_T Protokoll als SDP Media Description Field, SDP Attribut "rtpmap" und SDP Attribut "fmtp" und beim Standard-Signalisierungsprotokoll gemäß Q.765.5 als Single Codec übertragen wird und dort ein proprietäres Element darstellt.

7. Verfahren nach einem der vorhergehenden Ansprüche,
**dadurch gekennzeichnet, dass**
die zwischen den Media Gateway Controllern (6, 7) übertragenen Anrufsteuerungsparameter einen definierten Parameter enthalten, welcher anzeigt, ob eine Echo Cancellation ein- oder ausgeschaltet werden soll, wobei der Parameter beim SIP- bzw. SIP_T-Protokoll als SDP Attribut "ecan" und beim Standard-Signalisierungsprotokoll gemäß Q.765.5 als Echo Cancellation übertragen wird und dort ein proprietäres Element darstellt.

8. Verfahren nach einem der vorhergehenden Ansprüche,
**dadurch gekennzeichnet, dass**
bei einer Umschaltung auf einen Modus zur Faxübertragung die zwischen den Media Gateway Controllern (6, 7) übertragenen Anrufsteuerungsparameter einen definierten Parameter enthalten, welcher anzeigt, dass eine Echo Cancellation eingeschaltet werden soll, und bei einer Umschaltung auf einen Modus zur Modemübertragung einen definierten Parameter enthalten, welcher anzeigt, dass die Echo Cancellation ausgeschaltet werden soll, wobei der Parameter beim SIP- bzw. SIP_T-Protokoll als SDP Attribut "ecan" und beim Standard-Signalisierungsprotokoll gemäß Q.765.5 als Echo Cancellation übertragen wird und dort ein proprietäres Element darstellt.

9. Verfahren nach Anspruch 6,
**dadurch gekennzeichnet, dass**
der Codec, auf welchen die Bearerverbindung zur Umschaltung auf einen Datenübertragungsmodus eingerichtet werden soll, der G.711-Codec ist, bei dem gleichzeitig die Maximum Jitter Buffer Size der Bearerverbindung hochgesetzt und die Silence Suppression der Bearerverbindung ausgeschaltet wird.

10. Verfahren nach Anspruch 6,
**dadurch gekennzeichnet, dass**
der Codec, auf welchen die Bearerverbindung zur Umschaltung auf einen Datenübertragungsmodus eingerichtet werden soll, der T.38-Codec ist.

11. Verfahren nach einem der vorhergehenden Ansprüche,
**dadurch gekennzeichnet, dass**
nach dem Übertragen der Anrufsteuerungsparameter zwischen den Media Gateway Controllern (6, 7) diese in zugehörigen Media Gateways (10, 11) den Codec der Bearerverbindung mittels einer entsprechenden Signalisierung, insbesondere mittels des MGC-Protokolls/H.248 umschalten.

## Claims

1. A method for transferring call control parameters for switching over between a voice transfer mode and a data transfer mode between two media gateway controllers (6, 7), which are used between two telecommunication terminal devices separately from an establishment of a medium or bearer connection via an IP network,
**characterized in that**
the call control parameters are converted and transferred into the SIP or SIP_T protocol or from this into a standard signalling protocol, whereby the call control parameters contain a parameter for indicating a codec switchover of the bearer connection, which is transferred with regard to the SIP or SIP_T protocol implicitly in an SDP part and with regard to the standard signalling protocol in accordance with Q.765.5 as an Action Indicator.

2. The method as claimed in claim 1,
**characterized in that**
the standard signalling protocol is a BICC, BICC-ISUP+, ISUP+, VoIP, VoDSL, H.323 or Access Gateway protocol.

3. The method as claimed in one of the preceding claims,
**characterized in that**
the call control parameters are mapped in accordance with RFC-2327 in an SDP part of the SIP or SIP_T protocol and transferred in this between the media gateway controllers (6, 7).

4. The method as claimed in claim 1,
**characterized in that**
the Action Indicator in the standard signalling protocol contains a first value ("modify codec") when the codec switchover is initiated by the media gateway controller of the one side, whereby this first value is not converted to SDP but is regenerated on the other side if a "SIP:re-INVITE" message is received with an SDP session which indicates a codec for the data transfer.

5. The method as claimed in claim 1,
**characterized in that**
the Action Indicator contains a second value ("successful codec modification") if the media gateway controller of the remote, second side has successfully performed the codec switchover and acknowledges a "SIP:re-INVITE" message received from the first side with an SDP session, which indicates a codec for the data transfer, whereby the first side receives an acknowledgement ("SIP:200 OK") with an SDP session, containing the same codec for the data transfer, with the result that the first side can regenerate the Action Indicator.

6. The method as claimed in one of the preceding claims,
**characterized in that**
the call control parameters contain a parameter which indicates a codec to which the bearer connection is to be switched over, whereby the parameter is transferred with regard to the SIP or SIP_T protocol as SDP Media Description Field, SDP Attribute "rtpmap" and SDP Attribute "fmtp", and with regard to the standard signalling protocol as per Q.765.5 as a Single Codec and there represents a proprietary element.

7. The method as claimed in one of the preceding claims,
**characterized in that**
the call control parameters transferred between the media gateway controllers (6, 7) contain a defined parameter which indicates whether Echo Cancellation is to be activated or deactivated, whereby the parameter is transferred with regard to the SIP or SIP_T protocol as SDP Attribute "ecan" and with regard to the standard signalling protocol as per Q.765.5 as Echo Cancellation and there represents a proprietary element.

8. The method as claimed in one of the preceding claims,
**characterized in that**
with regard to a switchover to a mode for fax transfer the call control parameters transferred between the media gateway controllers (6, 7) contain a defined parameter which indicates that Echo Cancellation is to be activated, and with regard to a switchover to a mode for modem transfer contain a defined parameter which indicates that Echo Cancellation is to be deactivated, whereby the parameter is transferred with regard to the SIP or SIP_T protocol as SDP Attribute "ecan" and with regard to the standard signalling protocol as per Q.765.5 as Echo Cancellation and there represents a proprietary element.

9. The method as claimed in claim 6,
**characterized in that**
the codec on which the bearer connection for switching over to a data transfer mode is to be set up is the G.711 codec, whereby at the same time the Maximum Jitter Buffer Size of the bearer connection is increased and the Silence Suppression of the bearer connection is deactivated.

10. The method as claimed in claim 6,
**characterized in that**
the codec on which the bearer connection for switching over to a data transfer mode is to be set up is the T.38 codec.

11. The method as claimed in one of the preceding claims,
**characterized in that**
following the transfer of the call control parameters between the media gateway controllers (6, 7), these switch over the codec of the bearer connection by means of corresponding signalling, in particular by means of the MGC protocol/H.248, in associated media gateways (10, 11).

## Revendications

1. Procédé de transmission de paramètres de commande d'appel pour commuter entre un mode de transmission de la voix et un mode de transmission de données entre deux contrôleurs de passerelle média (6, 7) lesquels sont utilisés entre deux terminaux de télécommunication (1, 2) indépendamment de l'établissement d'une connexion média/support via un réseau IP,
**caractérisé en ce que**
on transmet les paramètres de commande d'appel en les convertissant en protocole SIP/SIP_T ou à partir de celui-ci en un protocole de signalisation standard, les paramètres de commande d'appel contenant un paramètre permettant d'afficher une commutation de codec de la connexion support, paramètre qui dans le protocole SIP/SIP_T est transmis implicitement dans un composant SDP et qui est transmis dans le protocole de signalisation standard selon Q.765.5 comme indicateur d'action.

2. Procédé selon la revendication 1,
**caractérisé en ce que**
le protocole de signalisation standard est un protocole BICC, BICC-ISUP+-, ISUP+-, VoIP, VoDSL, H.323 ou un protocole de passerelle d'accès.

3. Procédé selon l'une des revendications précédentes,
**caractérisé en ce que**
les paramètres de commande d'appel sont mappés selon RFC-2327 sur un composant SDP du protocole SIP/SIP_T et sont transmis dans celui-ci entre les contrôleurs de passerelle média (6, 7).

4. Procédé selon la revendication 1,
**caractérisé en ce que**
l'indicateur d'action dans le protocole de signalisation standard présente une première valeur ("modify codec") si la commutation de codec est déclenchée par le contrôleur de passerelle média d'un côté, ladite première valeur n'étant pas convertie vers SDP mais étant régénérée de l'autre côté si un message "SIP:re-INVITE" avec une session SDP est réceptionné, qui indique un codec pour la transmission de données.

5. Procédé selon la revendication 1,
**caractérisé en ce que**
l'indicateur d'action présente une deuxième valeur ("successful codec modification") si le contrôleur de passerelle média du deuxième côté, côté distant, a effectué la commutation de codec avec succès et acquitte un message "SIP:re-INVITE" reçu du premier côté avec une session SDP, qui indique un codec pour la transmission de données, le premier côté recevant un acquittement ("SIP:200 OK") avec une session SDP contenant le même codec pour la transmission de données, de sorte que le premier côté puisse régénérer l'indicateur d'action.

6. Procédé selon l'une des revendications précédentes,
**caractérisé en ce que**
les paramètres de commande d'appel comportent un paramètre indiquant un codec sur lequel la connexion support doit être commutée, ledit paramètre étant transmis dans le protocole SIP/SIP_T comme champ de description média SDP, attribut SDP "rtpmap" et attribut SDP "fmtp" et dans le protocole de signalisation standard selon Q.765.5 comme codec unique, où il représente un élément propriétaire.

7. Procédé selon l'une des revendications précédentes,
**caractérisé en ce que**
les paramètres de commande d'appel transmis entre les contrôleurs de passerelle média (6, 7) comportent un paramètre défini indiquant si une annulation d'écho doit être activée ou désactivée, ledit paramètre étant transmis dans le protocole SIP/SIP_T comme attribut SDP "ecan" et dans le protocole de signalisation standard selon Q.765.5 comme annulation d'écho, où il représente un élément propriétaire.

8. Procédé selon l'une des revendications précédentes,
**caractérisé en ce que**
en cas de commutation sur un mode de transmission par fax, les paramètres de commande d'appel transmis entre les contrôleurs de passerelle média (6, 7) comportent un paramètre défini indiquant qu'une annulation d'écho doit être activée et en cas de commutation sur un mode de transmission par modem, ils comportent un paramètre défini indiquant que la annulation d'écho doit être désactivée, ledit paramètre étant transmis dans le protocole SIP/SIP_T comme attribut SDP "ecan" et dans le protocole de signalisation standard selon Q.765.5 comme annulation d'écho, où il représente un élément propriétaire.

9. Procédé selon la revendication 6,
**caractérisé en ce que**
le codec sur lequel doit être configurée la connexion support pour commuter sur un mode de transmission de données, est un codec G.711, dans lequel on augmente la taille maximum du tampon de gigue de la connexion support et on désactive en même temps la suppression du silence de la connexion support.

10. Procédé selon la revendication 6,
**caractérisé en ce que**
le codec sur lequel doit être configurée la connexion support pour commuter sur un mode de transmission de données, est le codec T.38.

11. Procédé selon l'une des revendications précédentes,
**caractérisé en ce que**
après la transmission des paramètres de commande d'appel entre les contrôleurs de passerelles média (6, 7), ces derniers commutent le codec de la connexion support dans des passerelles média associées (10, 11) au moyen d'une signalisation correspondante, en particulier au moyen du protocole MGC/H.248.
